# EUROPÄISCHE PATENTANMELDUNG

(11) **EP 4 663 874 A2**
(43) Veröffentlichungstag der Anmeldung: **17.12.2025**
(21) Anmeldenummer: 25176332.2
(22) Anmeldetag: 14.05.2025
(51) Int. Cl.: E04F 15/18

(54) **MATTE ODER PLATTE**

(30) Priorität: 11.06.2024 DE 202024103091 U
(71) Anmelder: Schlüter-Systems KG, 58640 Iserlohn (DE)
(72) Erfinder: Schlüter, Marc, 58636 Iserlohn (DE)
(74) Vertreter: Schröter & Albrecht Patentanwälte PartG mbB

(57) **Zusammenfassung**

Matte oder Platte (1) umfassend eine wasser- und wasserdampfundurchlässige flexible Kunststoffschicht (4) aus folienartigem Kunststoff, die eine Oberseite (5) und eine Unterseite (6) aufweist, und eine fest mit der Unterseite (6) der Kunststoffschicht (4) verbundene Haftvermittlungsschicht (11), bei der es sich insbesondere um eine Vliesstoff- oder um eine Gewebeschicht handelt, oder selbstklebende Schicht, wobei die Kunststoffschicht (4) derart mit einer Strukturierung versehen ist, dass oberseitig Noppen (7) vorstehen, die unterseitig jeweils einen Noppenhohlraum (8) bilden, und dass unterseitig Wasser- oder Wasserdampfabführkanäle (9) ausgebildet sind, wobei die maximale Höhe (hₘₐₓ) der Matte oder Platte (1) maximal 5mm beträgt, insbesondere maximal 3mm, und wobei in Noppen (7) aufweisenden Bereichen zumindest 200, bevorzugt zumindest 250, besser noch zumindest 350 Noppen pro 10cm² vorgesehen sind.

## Beschreibung

Die vorliegende Erfindung betrifft eine Matte oder Platte umfassend eine wasser- und wasserdampfundurchlässige flexible Kunststoffschicht aus folienartigem Kunststoff, die eine Oberseite und eine Unterseite aufweist, und eine fest mit der Unterseite der Kunststoffschicht verbundene Haftvermittlungsschicht. Ferner betrifft die Erfindung einen Fußbodenaufbau, umfassend eine Estrichschicht, eine unmittelbar auf der Estrichschicht verlegte Dampfdruckausgleichsschicht und einen auf der Dampfdruckausgleichsschicht verlegten Bodenbelag.

Fußböden in Innenräumen weisen normalerweise eine Estrichschicht auf, auf der dann der eigentliche Bodenbelag verlegt ist. Die Estrichschicht dient zum einen dazu, einen ebenen Untergrund zur Verlegung des Bodenbelags zu schaffen. Zum anderen dient sie als Lastverteilungsschicht, unter der sich Flächenheizungen sowie Wärme- und Trittschalldämmungen befinden können. Ein Problem beim Herstellen einer Estrichschicht besteht darin, dass diese sehr lange zum Trocknen benötigt. So rechnet man mit einer Trocknungszeit von normalerweise einer Woche pro 1cm Estrichstärke. Bei dickeren Estrichschichten dauert das Trocknen noch länger. Entsprechend muss aufgrund der während des Trocknens in der Estrichschicht entstehenden Spannungen und aufgrund der aus der Estrichschicht aufsteigenden Feuchtigkeit lange gewartet werden, bevor auf der Estrichschicht der Bodenbelag verlegt werden kann.

Bei feuchtigkeitsbeständigen Bodenbelägen, wie beispielsweise Fliesen, kann die Wartezeit verkürzt werden, indem zwischen dem Estrich und dem Bodenbelag eine so genannte Entkopplungsschicht verlegt wird, die innerhalb der Estrichschicht entstehende Spannungen aufnimmt, so dass die Spannungen nicht auf den Bodenbelag übertragen werden und diesen zerstören können. Eine Entkopplungsschicht wird normalerweise unter Einsatz einer Entkopplungsmatte gebildet, die unter Verwendung eines Fliesenklebers auf die Estrichschicht geklebt wird, woraufhin dann die Fliesen ebenfalls unter Verwendung eines Fliesenklebers auf der Entkopplungsmatte verlegt werden. Entkopplungsmatten umfassen hierzu normalerweise eine flexible Kunststoffschicht aus folienartigem Kunststoff und eine fest mit der Unterseite der Kunststoffschicht verbundene Haftvermittlungsschicht, mit der die Matte auf dem Estrich verklebt wird. Die Kunststoffschicht ist derart strukturiert, dass an der Oberseite Vertiefungen gebildet werden, die unterseitig von Kanälen umgeben sind. Als Beispiel wird auf die von der Anmelderin unter dem Produktnamen "DITRA" vertriebene Entkopplungsmatte verwiesen. Die Vertiefungen werden beim Verlegen der Fliesen mit Fliesenkleber gefüllt, der nach dem Trocknen stelzenförmige Auflager bildet, über die auf den Bodenbelag einwirkende Lasten in die Estrichschicht eingeleitet werden. Die an der Unterseite der Kunststoffschicht gebildeten Kanäle verschaffen den stelzenförmigen Auflagern ein Bewegungsspiel, über das auftretende Spannungen abgebaut werden können. Ferner kann aus der Estrichschicht aufsteigende Feuchtigkeit über diese Kanäle zur Seitenkante der Entkopplungsmatte geleitet werden. Der Einsatz solcher Entkopplungsmatten hat sich in der Vergangenheit durchaus bewährt. Ein Nachteil besteht allerdings dahingehend, dass die Fliesenkleberschicht, die oberhalb der Entkopplungsmatte zum Verlegen der Fliesen aufgetragen werden muss, mehrere Millimeter stark sein muss, da sie eine Lastverteilungsschicht bildet, über die später auf den Bodenbelag einwirkenden Lasten über die stelzenförmigen Auflager in die Estrichschicht eingeleitet werden. Dies steht dem häufigen Wunsch nach Fußbodenaufbauten mit möglichst geringer Höhe entgegen.

Beim Verlegen von feuchtigkeitsunbeständigen Bodenbelägen, wie beispielsweise Parkett, muss das vollständige Trocknen der Estrichschicht abgewartet werden, um sicherzustellen, dass der Bodenbelag nicht durch aufsteigende Feuchtigkeit beschädigt wird. Bei der Verlegung von Parkett bietet sich der Einsatz einer Entkopplungsmatte nicht an. Zum einen sind für das Verlegen von Parkett verwendete Klebstoffe im Gegensatz zu Fliesenkleber zum Lastabtrag eher ungeeignet. Zum anderen kann zwischen benachbarten Entkopplungsmatten Feuchtigkeit aufsteigen und Beschädigungen am Bodenbelag hervorrufen.

Ausgehend von diesem Stand der Technik ist es eine Aufgabe der vorliegenden Erfindung, eine Matte oder Platte sowie einen Fußbodenaufbau der eingangs genannten Art mit alternativem Aufbau zu schaffen.

Zur Lösung dieser Aufgabe schafft die vorliegende Erfindung eine Matte oder Platte umfassend eine wasser- und wasserdampfundurchlässige flexible Kunststoffschicht aus folienartigem Kunststoff, die eine Oberseite und eine Unterseite aufweist, und eine fest mit der Unterseite der Kunststoffschicht verbundene Haftvermittlungsschicht, bei der es sich insbesondere um eine Vliesstoff- oder um eine Gewebeschicht handelt, oder selbstklebende Schicht, wobei die Kunststoffschicht derart mit einer Strukturierung versehen ist, dass oberseitig Noppen vorstehen, die unterseitig jeweils einen Noppenhohlraum bilden, und dass unterseitig Wasser- oder Wasserdampfabführkanäle ausgebildet sind, wobei die maximale Höhe der Matte oder Platte maximal 5mm beträgt, insbesondere maximal 3mm, und wobei in Noppen aufweisenden Bereichen zumindest 200, bevorzugt zumindest 250, besser noch zumindest 350 Noppen pro 10cm² vorgesehen sind.

Im Vergleich zu Entkopplungsmatten der eingangs beschriebenen Art ist die Kunststoffschicht der erfindungsgemäße Matte oder Platte an ihrer Oberseite nicht mit einzelnen Vertiefungen, sondern mit vorstehenden Noppen versehen. An der Unterseite sind Wasser- oder Wasserdampfabführkanäle ausgebildet. Dank der hohen Anzahl der Noppen und der geringen Höhe der erfindungsgemäßen Matte oder Platte sind die Noppen vergleichsweise klein und sehr stabil. Entsprechend können auf die Oberseite der Kunststoffschicht einwirkende Lasten über die Noppen zur Unterseite übertragen werden. Die Noppen sind also selbst im für Fußbodenaufbauten erforderlichen Maß tragfähig. Entsprechend wird, wenn auf der erfindungsgemäßen Matte oder Platte ein Fliesenbelag verlegt wird, der Lastabtrag vornehmlich über die Noppen der Kunststoffschicht und damit über die Kunststoffschicht selbst erzielt. Damit kann eine zum Verlegen des Bodenbelags aufgetragene Kleberschicht deutlich dünner als beim Einsatz herkömmlicher Entkopplungsmatten aufgetragen werden oder bei loser Verlegung des Bodenbelags auch ganz wegfallen, was zu geringeren Fußbodenaufbauhöhen führt. Aus dem Estrich aufsteigende Feuchtigkeit wird über die Wasser- oder Wasserdampfabführkanäle abgeleitet, so dass diese den oberhalb der Matte oder Platte angeordneten Bodenbelag nicht erreichen kann. Entsprechend kann auf der erfindungsgemäßen Matte oder Platte auch ein feuchtigkeitsunbeständiger Bodenbelag problemlos verlegt werden, beispielsweise Parkett. Die herkömmlichen Trocknungszeiten von Estrich müssen hierfür nicht abgewartet werden. Die Entkopplungswirkung, welche die erfindungsgemäße Matte oder Platte entfaltet, ist dabei vergleichbar mit der Entkopplungswirkung von Entkopplungsmatten der eingangs beschriebenen Art.

Die Stärke der Kunststoffschicht beträgt, zumindest im Bereich der Noppen, bevorzugt zumindest 0,3mm, besser noch zumindest 0,4mm. Versuche haben ergeben, dass sich mit einer solchen Stärke Noppen mit hinreichender Tragfähigkeit herstellen lassen. Vorteilhaft beträgt die Stärke der Kunststoffschicht maximal 0,5mm, was zu einem preisgünstigen Aufbau führt.

Die Strukturierung bildet vorteilhaft ein wiederkehrendes Muster, was mit gleichmäßigen Eigenschaften einhergeht.

Die Noppenhohlräume benachbart angeordnete Noppen sind bevorzugt über Wasser- oder Wasserdampfabführkanäle miteinander verbunden, wodurch auch die Noppenhohlräume in das Wasser- oder Wasserdampfabführsystem eingebunden werden. Darüber hinaus bilden die sich zwischen den Noppen erstreckenden, im Wesentlichen U-förmig ausgebildeten Kunststoffstege, welche die Wasser- oder Wasserdampfabführkanäle definieren, Versteifungsstreben, welche die Tragfähigkeit der einzelnen Noppen weiter erhöhen.

Vorteilhaft ist die Strukturierung derart gewählt, dass der Noppenhohlraum jeder Noppe mit den Noppenhohlräumen von sechs unmittelbar benachbart angeordneten Noppen jeweils über einen Wasser- oder Wasserdampfabführkanal verbunden ist. Auf diese Weise wird ein sehr kompakter Aufbau der Kunststoffschicht erzielt.

Bevorzugt weisen die Noppen, wenn die Kunststoffschicht von oben betrachtet wird, eine Breite oder einen Durchmesser von maximal 4mm auf, bevorzugt von maximal 3mm.

Gemäß einer Ausgestaltung der vorliegenden Erfindung sind die Noppen, wenn die Kunststoffschicht von oben betrachtet wird, gerundet ausgebildet, insbesondere kreisrund.

Die Kunststoffschicht weist von oben betrachtet bevorzugt rechteckige Außenabmessungen auf, die durch zwei sich in einer Längsrichtung erstreckende Längskanten und zwei sich in einer Querrichtung erstreckenden Querkanten definiert werden, wobei die Länge der Längskanten bevorzugt einem Vielfachen der Länge der Querkanten entspricht. Dank solcher Abmessungen lässt sich die erfindungsgemäße Matte oder Platte einfach herstellen, transportieren, insbesondere als Rollenware, und verlegen.

Vorteilhaft weist die Kunststoffschicht zumindest einen ebenen, noppenfrei ausgebildeten Randabschnitt auf. Dank solcher Randabschnitte lassen sich benachbart angeordnete Matten oder Platten unter Verwendung von Dichtklebestreifen einfach wasser- und wasserdampfdicht miteinander verbinden, um eine Dampfdruckausgleichsschicht zu erzeugen. Solche ebenen Randabschnitte können entlang einer, mehrerer oder sämtlicher Kanten der Kunststoffschicht vorgesehen sein, insbesondere im unteren Bereich der Kunststoffschicht, so dass sie bzw. eine auf ihrer Unterseite angeordnete Haftvermittlungsschicht im verlegten Zustand auf dem Untergrund aufliegen. Bevorzugt sind Randabschnitte entlang einander gegenüberliegender angeordneter Längskanten der Kunststoffschicht vorgesehen. Insbesondere ist ein Randbereich unterseitig mit der Haftvermittlungsschicht bedeckt, während der andere Randbereich mit keiner Haftvermittlungsschicht versehen ist.

Ferner schafft die vorliegende Erfindung zur Lösung der eingangs genannten Aufgabe einen Fußbodenaufbau, umfassend eine Estrichschicht, eine unmittelbar auf der Estrichschicht verlegte Dampfdruckausgleichsschicht und einen auf der Dampfdruckausgleichsschicht verlegten Bodenbelag, dadurch gekennzeichnet, dass die Dampfdruckausgleichsschicht aus einer Vielzahl von benachbart zueinander angeordneten erfindungsgemäßen Matten oder Platten gebildet ist, wobei Randbereiche von Kunststoffschichten unmittelbar benachbart angeordneter Matten oder Platten wasser- und wasserdampfdicht miteinander verbunden sind, insbesondere unter Verwendung von Dichtklebestreifen. Der Bodenbelag kann unmittelbar auf der Dampfdruckausgleichsschicht angeordnet sein. Alternativ ist es auch möglich, zwischen Dampfdruckausgleichsschicht und Bodenbelag eine Zwischenschicht vorzusehen, wie beispielsweise eine Ausgleichsmasse oder dergleichen.

Die Dampfdruckausgleichsschicht kann lose auf der Estrichschicht angeordnet oder unter Verwendung eines Klebstoffes fest mit der Estrichschicht verbunden sein, wobei letztere Variante bevorzugt wird.

Der Bodenbelag kann lose auf der Dampfdruckausgleichsschicht angeordnet oder unter Verwendung eines Klebstoffes fest oder zumindest punktuell fest mit der Dampfdruckausgleichsschicht verbunden sein.

Der Bodenbelag weist bevorzugt feuchtigkeitsunbeständiges Material auf, so dass die Vorteile der erfindungsgemäßen Matten oder Platten besonders gut zur Geltung kommen.

Ferner wird vorgeschlagen, eine erfindungsgemäße Matte oder Platte zur Ausbildung einer Dampfdruckausgleichsschicht zu verwenden, insbesondere in einem Fußbodenaufbau.

Weitere Vorteile und Merkmale der vorliegenden Erfindung werden anhand der nachfolgenden Beschreibung unter Bezugnahme auf die beiliegende Zeichnung deutlich. Darin ist
Figur 1 eine perspektivische Draufsicht eines mittigen Ausschnitts einer Matte gemäß einer Ausführungsform der vorliegenden Erfindung;
Figur 2 eine perspektivische Unteransicht des in Figur 1 gezeigten Ausschnitts;
Figur 3 eine Draufsicht des in Figur 1 gezeigten Ausschnitts;
Figur 4 eine Seitenansicht des in Figur 1 gezeigten Ausschnitts;
Figur 5 eine Draufsicht von Randbereichen von zwei benachbart angeordneten Matten;
Figur 6 eine Seitenansicht der in Figur 5 gezeigten Ansicht; und
Figur 7 eine Schnittansicht eines Fußbodenaufbaus gemäß einer Ausführungsform der vorliegenden Erfindung, der mehrere der in den Figuren 1 bis 6 dargestellten Matten aufweist.

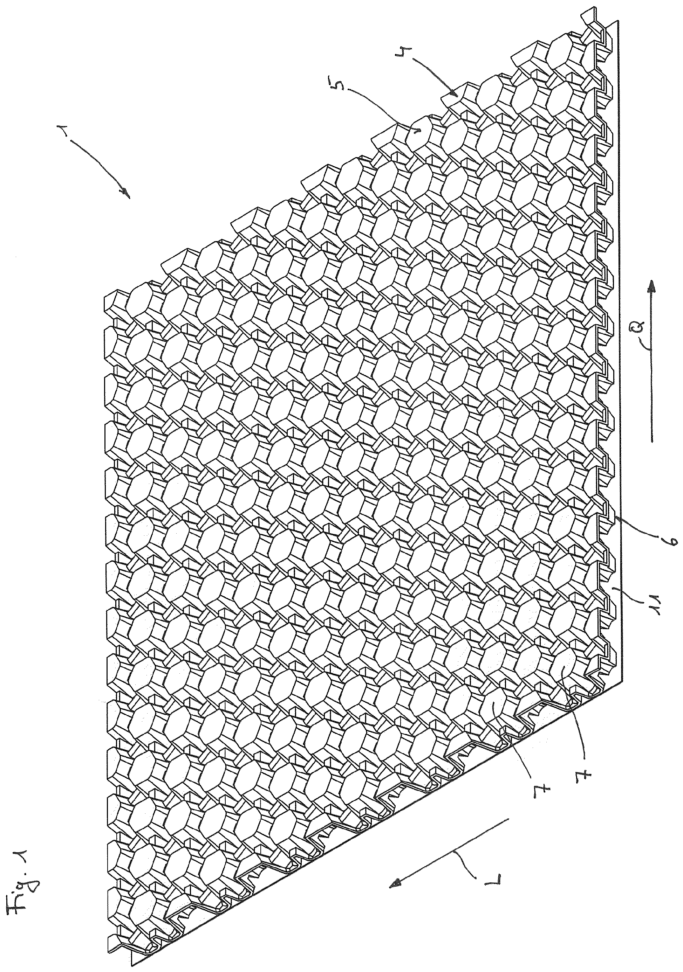

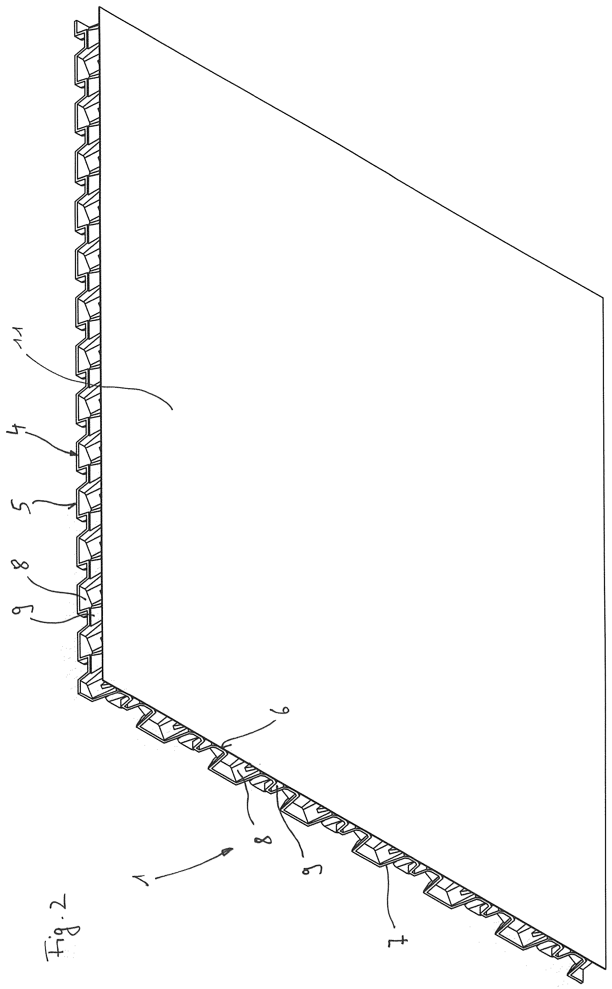

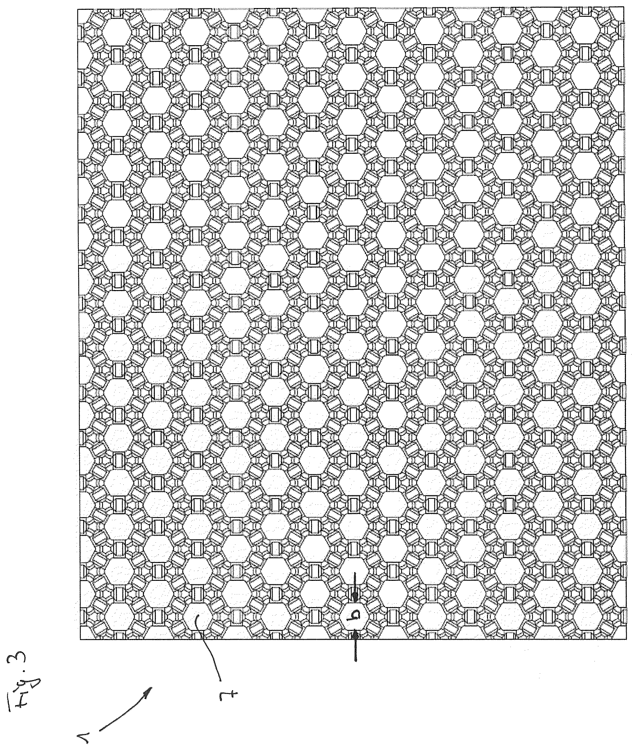

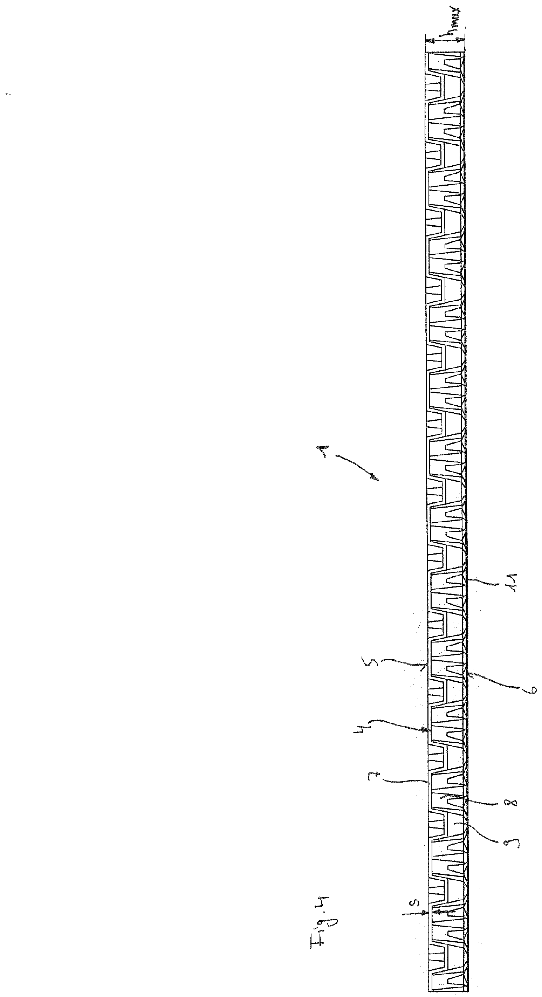

Die Figuren 1 bis 6 zeigen Ausschnitte einer Matte 1 gemäß einer Ausführungsform der vorliegenden Erfindung, die grundsätzlich auch als Platte ausgebildet sein kann. Die Matte 1 weist von oben betrachtet rechteckige Außenabmessungen auf, die durch zwei sich in einer Längsrichtung L parallel zueinander erstreckende Längskanten und zwei sich in einer Querrichtung Q parallel zueinander erstreckende Querkanten definiert werden, wobei die Länge der Längskanten bevorzugt einem Vielfachen der Länge der Querkanten entspricht. Die Breite der Matte 1 von einer Längskante zur anderen liegt bevorzugt im Bereich von 40 bis 100cm. Die Länge der Matte 1 von einer Querkante zur anderen beträgt bevorzugt mehrere Meter, wobei die Matte 1 vorteilhaft als Rollenware ausgeliefert wird. Die maximale Höhe hₘₐₓ der Matte 1 beträgt bevorzugt maximal 5mm, insbesondere maximal 3mm.

Die Matte 1 umfasst vorliegend eine wasser- und wasserdampfundurchlässige sowie flexible Kunststoffschicht 4, die aus einem folienartigem Kunststoff hergestellt ist und keinerlei Durchbrechungen aufweist. Die Kunststoffschicht 4 weist eine Oberseite 5 und eine Unterseite 6 auf und ist derart mit einer Strukturierung versehen, dass oberseitig Noppen 7 vorstehen, die unterseitig jeweils einen Noppenhohlraum 8 bilden, und dass unterseitig Wasser- oder Wasserdampfabführkanäle 9 ausgebildet sind. Die Strukturierung bildet vorliegend ein wiederkehrendes Muster, bei dem jede Noppe 7 jeweils sechs unmittelbar benachbart und gleichmäßig um die entsprechende Noppe 7 verteilt angeordnete Noppen 7 aufweist, wobei die Noppenhohlräume 8 benachbart angeordneter Noppen 7 jeweils über einen Wasser- oder Wasserdampfabführkanal 9 miteinander verbunden sind. Dabei sind zumindest 200, bevorzugt zumindest 250, besser noch zumindest 350 Noppen 7 pro 10cm² vorgesehen. Die Noppen 7 sind, wenn die Kunststoffschicht 4 von oben betrachtet wird, vorliegend sechseckig ausgebildet und weisen eine Breite b von maximal 4mm auf, bevorzugt von maximal 3mm Die Stärke s der Kunststoffschicht 4 beträgt zumindest im Bereich der Noppen 7 bevorzugt zumindest 0,3mm, besser noch zumindest 0,4mm.

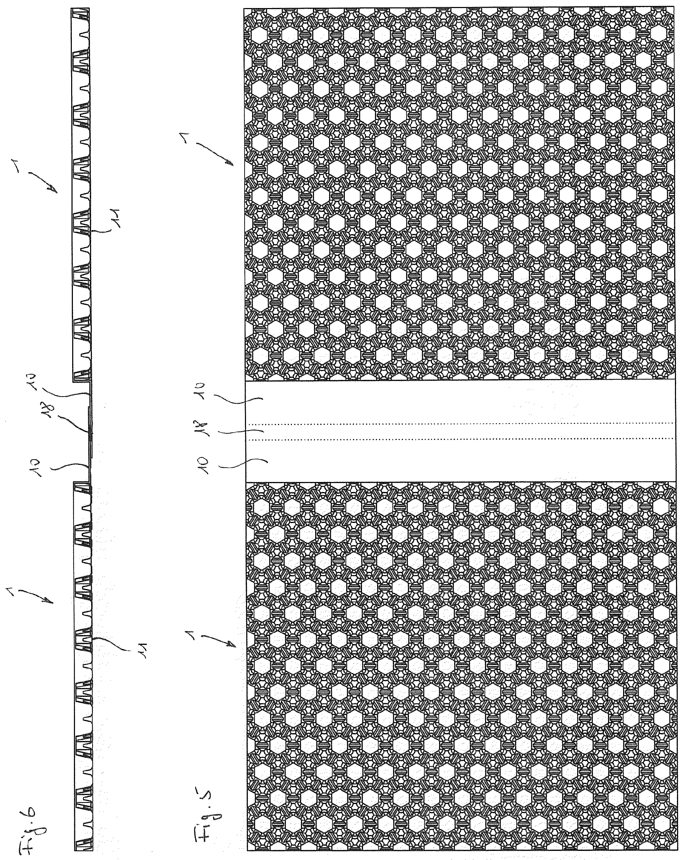

Die Figuren 5 und 6 zeigen noppenfrei und eben ausgebildete Randabschnitte 10 der Kunststoffschicht 4, die sich bei der vorliegenden Ausführungsform jeweils entlang beider Längskanten erstrecken und beim Verlegen einander überlappend angeordnet werden. Die Randabschnitte 10 sind vorliegend im unteren Bereich der Kunststoffschicht 4 ausgebildet, so dass sie im auf einem Untergrund verlegten Zustand der Matte 1 auf dem Untergrund aufliegen. An der Unterseite eines der Randabschnitte 10 ist ein sich entlang der gesamten Längskante erstreckender selbstklebender Dichtklebestreifen 18 angeordnet, der mit einer nicht näher dargestellten Schutzschicht versehen ist, die vor der Verlegung der Matte 1 abgezogen werden kann.

Ferner umfasst die Matte 1 eine fest mit der Unterseite 6 der Kunststoffschicht 4 verbundene Haftvermittlungsschicht 11, bei der es sich insbesondere um eine Vliesstoff- oder um eine Gewebeschicht handelt. Die Haftvermittlungsschicht 11 bedeckt im Wesentlichen die gesamte Unterseite 6 der Kunststoffschicht 4. Bei der vorliegenden Ausführungsform ist lediglich einer der einander gegenüber angeordneten Randabschnitte 10, in den Figuren 5 und 6 der mit dem Dichtklebestreifen 18 versehene Randabschnitt 10 links im Bild, nicht von der Haftvermittlungsschicht bedeckt. Die Befestigung der Haftvermittlungsschicht 11 an der Kunststoffschicht 4 kann unmittelbar nach der Herstellung der Kunststoffschicht 4 erfolgen, indem die Haftvermittlungsschicht 11 an die noch heiße, nicht ganz ausgehärtete Kunststoffschicht 4 angedrückt wird. Natürlich sind auch andere, auch zu einem späteren Zeitpunkt durchgeführte Fügeverfahren denkbar, wie beispielsweise Schweißen, Kleben oder dergleichen. An dieser Stelle sei darauf hingewiesen, dass anstelle der Haftvermittlungsschicht 11 auch eine selbstklebende Schicht vorgesehen sein kann, auch wenn dies vorliegend nicht dargestellt ist.

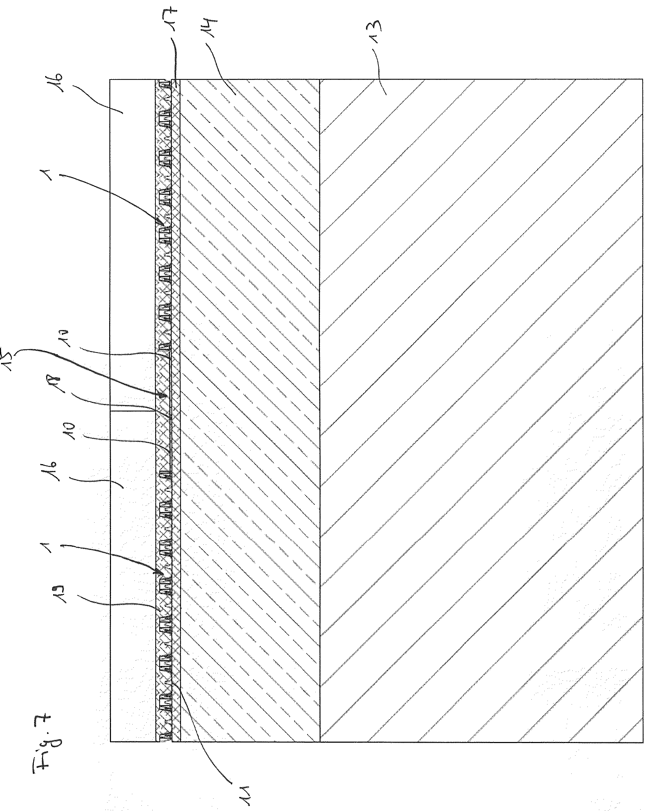

Figur 7 zeigt einen Fußbodenaufbau 12 gemäß einer Ausführungsform der vorliegenden Erfindung, umfassend eine auf einem Untergrund 13 aufgetragene Estrichschicht 14, eine unmittelbar auf der Estrichschicht 14 verlegte Dampfdruckausgleichsschicht 15 und einen auf der Dampfdruckausgleichsschicht 15 verlegten Bodenbelag 16, der vorliegend aus einem feuchtigkeitsunbeständigen Material hergestellt ist, das, wenn es Feuchtigkeit ausgesetzt wird, beschädigt wird oder seine äußeren Abmessungen ändert, insbesondere aufquillt, wie beispielsweise Parkett. Die Dampfdruckausgleichsschicht 15 ist vorliegend aus einer Vielzahl von benachbart zueinander angeordneten Matten 1 der zuvor beschriebenen Art gebildet, die bevorzugt unter Einsatz eines Klebstoffes 17, beispielsweise Fliesenkleber, mit der Estrichschicht 14 verklebt sind. Die Randabschnitte 11 von Kunststoffschichten 4 unmittelbar benachbart angeordneter Matten 1 sind wasser- und wasserdampfdicht miteinander verbunden, vorliegend unter Verwendung von Dichtklebestreifen 18. Der Bodenbelag 16 ist vorliegend unter Verwendung eines Klebstoffes 19, beispielsweise in Form eines handelsüblichen Parkettklebers, fest mit der Dampfdruckausgleichsschicht 15 verbunden. Grundsätzlich ist es auch möglich, zwischen Dampfdruckausgleichsschicht 15 und Bodenbelag 16 eine Zwischenschicht vorzusehen, wie beispielsweise eine Ausgleichsmasse oder dergleichen.

Dank der hohen Anzahl der Noppen 7 und der geringen Höhe der erfindungsgemäßen Matte 1 sind die Noppen 7 vergleichsweise klein und sehr stabil. Entsprechend können auf die Oberseite der Kunststoffschicht 4 einwirkende Lasten über die Noppen 7 zur Unterseite 6 übertragen werden. Die Noppen 7 sind also selbst im für Fußbodenaufbauten erforderlichen Maß tragfähig. Somit wird, wenn auf der erfindungsgemäßen Matte 1 ein Bodenbelag 16 verlegt wird, der Lastabtrag nicht über durch den Klebstoff 17 gebildete stelzenförmige Auflager, sondern über die Noppen 7 der Kunststoffschicht 4 und damit über die Kunststoffschicht 4 selbst erzielt. Damit kann die zum Verlegen des Bodenbelags 16 aufgetragene Klebstoffschicht deutlich dünner als beim Verlegen herkömmlicher Entkopplungsmatten aufgetragen werden, was zu geringeren Fußbodenaufbauhöhen führt. Aus dem Estrich aufsteigende Feuchtigkeit wird über die Wasser- oder Wasserdampfabführkanäle 9 abgeleitet, so dass diese den oberhalb der Matte 1 angeordneten Bodenbelag 16 nicht erreichen kann. Entsprechend kann auf der erfindungsgemäßen Matte 1 auch ein feuchtigkeitsunbeständiger Bodenbelag 16 problemlos verlegt werden, beispielsweise Parkett. Die herkömmlichen Trocknungszeiten von Estrich müssen hierfür nicht abgewartet werden.

Es sollte klar sein, dass die zuvor beschriebene Ausführungsform nicht als einschränkend zu verstehen ist. Vielmehr sind Änderungen und Modifikationen möglich, ohne den durch die beiliegenden Ansprüche definierten Schutzbereich zu verlassen.

### BEZUGSZIFFERNLISTE

- 1: Matte
- 4: Kunststoffschicht
- 5: Oberseite
- 6: Unterseite
- 7: Noppe
- 8: Noppenhohlraum
- 9: Wasser- oder Wasserdampfabführkanal
- 10: Randabschnitt
- 11: Haftvermittlungsschicht
- 12: Fußbodenaufbau
- 13: Untergrund
- 14: Estrichschicht
- 15: Dampfdruckausgleichsschicht
- 16: Bodenbelag
- 17: Klebstoff
- 18: Dichtklebestreifen
- 19: Klebstoff
- L: Längsrichtung
- Q: Querrichtung
- d: Durchmesser
- s: Stärke
- a: Maß
- hₘₐₓ: maximale Höhe

## Patentansprüche

1. Matte oder Platte (1) umfassend eine wasser- und wasserdampfundurchlässige flexible Kunststoffschicht (4) aus folienartigem Kunststoff, die eine Oberseite (5) und eine Unterseite (6) aufweist, und eine fest mit der Unterseite (6) der Kunststoffschicht (4) verbundene Haftvermittlungsschicht (11), bei der es sich insbesondere um eine Vliesstoff- oder um eine Gewebeschicht handelt, oder selbstklebende Schicht, wobei die Kunststoffschicht (4) derart mit einer Strukturierung versehen ist, dass oberseitig Noppen (7) vorstehen, die unterseitig jeweils einen Noppenhohlraum (8) bilden, und dass unterseitig Wasser- oder Wasserdampfabführkanäle (9) ausgebildet sind, wobei die maximale Höhe (hₘₐₓ) der Matte oder Platte (1) maximal 5mm beträgt, insbesondere maximal 3mm, und wobei in Noppen (7) aufweisenden Bereichen zumindest 200, bevorzugt zumindest 250, besser noch zumindest 350 Noppen pro 10cm² vorgesehen sind.

2. Matte oder Platte (1) nach Anspruch 1, **dadurch gekennzeichnet, dass** die Stärke (s) der Kunststoffschicht (4) zumindest 0,3mm beträgt, bevorzugt zumindest 0,4mm.

3. Matte oder Platte (1) nach Anspruch 1 oder 2, **dadurch gekennzeichnet, dass** die Strukturierung ein wiederkehrendes Muster bildet.

4. Matte oder Platte (1) nach einem der vorhergehenden Ansprüche, **dadurch gekennzeichnet, dass** die Noppenhohlräume (8) benachbart angeordnete Noppen (7) über die Wasser- oder Wasserdampfabführkanäle (9) miteinander verbunden sind.

5. Matte oder Platte (1) nach Anspruch 3 und 4, **dadurch gekennzeichnet, dass** die Strukturierung derart gewählt ist, dass der Noppenhohlraum (8) jeder Noppe (7) mit den Noppenhohlräumen (8) von sechs unmittelbar benachbart angeordneten Noppen (7) jeweils über einen Wasser- oder Wasserdampfabführkanal (9) verbunden ist.

6. Matte oder Platte (1) nach einem der vorhergehenden Ansprüche, **dadurch gekennzeichnet, dass** die Noppen (7), wenn die Kunststoffschicht (4) von oben betrachtet wird, eine Breite (b) oder einen Durchmesser von maximal 4mm aufweisen, bevorzugt von maximal 3mm.

7. Matte oder Platte (1) nach einem der vorhergehenden Ansprüche, **dadurch gekennzeichnet, dass** die Noppen (7), wenn die Kunststoffschicht (4) von oben betrachtet wird, gerundet ausgebildet sind, insbesondere kreisrund.

8. Matte oder Platte (1) nach einem der vorhergehenden Ansprüche, **dadurch gekennzeichnet, dass** die Kunststoffschicht (4) von oben betrachtet rechteckige Außenabmessungen aufweist, die durch zwei sich in einer Längsrichtung erstreckende Längskanten (2) und zwei sich in einer Querrichtung erstreckenden Querkanten (3) definiert werden, wobei die Länge der Längskanten (2) bevorzugt einem Vielfachen der Länge der Querkanten (3) entspricht.

9. Matte oder Platte (1) nach einem der vorhergehenden Ansprüche, **dadurch gekennzeichnet, dass** die Kunststoffschicht (4) zumindest einen ebenen, noppenfrei ausgebildeten Randabschnitt (10) aufweist.

10. Fußbodenaufbau (12), umfassend eine Estrichschicht (14), eine unmittelbar auf der Estrichschicht (14) verlegte Dampfdruckausgleichsschicht (15) und einen auf der Dampfdruckausgleichsschicht (15) verlegten Bodenbelag (16), **dadurch gekennzeichnet, dass** die Dampfdruckausgleichsschicht (15) aus einer Vielzahl von benachbart zueinander angeordneten Matten oder Platten (1) nach einem der vorhergehenden Ansprüche gebildet ist, wobei Randbereiche von Kunststoffschichten (4) unmittelbar benachbart angeordneter Matten oder Platten (1) wasser- und wasserdampfdicht miteinander verbunden sind, insbesondere unter Verwendung von Dichtklebestreifen.

11. Fußbodenaufbau (12) nach Anspruch 10, **dadurch gekennzeichnet, dass** die Dampfdruckausgleichsschicht (15) lose auf der Estrichschicht (14) angeordnet oder unter Verwendung eines Klebstoffes fest mit der Estrichschicht (14) verbunden ist.

12. Fußbodenaufbau (12) nach Anspruch 10 oder 11, **dadurch gekennzeichnet, dass** der Bodenbelag (16) lose auf der Dampfdruckausgleichsschicht (15) angeordnet oder unter Verwendung eines Klebstoffes (17) fest mit der Dampfdruckausgleichsschicht (15) verbunden ist.

13. Fußbodenaufbau (12) nach einem der Ansprüche 10 bis 12, **dadurch gekennzeichnet, dass** der Bodenbelag (16) feuchtigkeitsunbeständiges Material aufweist.

14. Verwendung einer Matte oder Platte (1) nach einem der Ansprüche 1 bis 9 zur Ausbildung einer Dampfdruckausgleichsschicht (15), insbesondere in einem Fußbodenaufbau (12).
